# FASCICULE DE BREVET EUROPEEN

(11) **EP 2 622 526 B1**
(45) Date de publication et mention de la délivrance du brevet: **04.04.2018**
(21) Numéro de dépôt: 11754347.0
(22) Date de dépôt: 30.08.2011
(51) Int. Cl.: G06F 21/00, G06K 7/08

(54) **DISPOSITIF DE PROTECTION, TERMINAL DE PAIEMENT ÉLECTRONIQUE ET TÊTE DE LECTURE MAGNÉTIQUE CORRESPONDANTS**
SCHUTZVORRICHTUNG, ELEKTRONISCHER ZAHLUNGSTERMINAL UND MAGNETISCHER LESEKOPF DAFÜR
PROTECTION DEVICE, ELECTRONIC PAYMENT TERMINAL AND MAGNETIC READING HEAD CORRESPONDING THERETO

(30) Priorité: 30.09.2010 FR 1057889
(43) Date de publication de la demande: 07.08.2013
(73) Titulaire: Ingenico Group, 75015 Paris (FR)
(72) Inventeur: DELORME, Jean-Jacques, 26320 Saint-Marcel-Lès-Valence (FR)
(74) Mandataire: Vidon Brevets & Stratégie
(86) Numéro de dépôt international: PCT/EP2011/064929
(87) Numéro de publication internationale: WO 2012/041623

(56) Documents cités:
- US-A1- 2008 265 032
- US-A1- 2008 315 989

## Description

### 1. Domaine de l'invention

Le domaine de l'invention est celui des terminaux de paiement.

Plus précisément, l'invention concerne les terminaux de paiement acceptant des cartes magnétiques. Ce type de carte de paiement est très répandu, notamment hors de la zone européenne. De ce fait, il existe un besoin important pour des terminaux adaptés à ce type de carte de paiement.

### 2. Art antérieur

On constate que les terminaux installés de paiement par carte magnétique sont peu résistants aux fraudes. L'attaque la plus fréquence consiste pour un attaquant à obtenir un accès aux signaux électriques en provenance de la tête de lecture magnétique d'un tel terminal par un simple branchement électrique d'un appareil parasite. Les informations obtenues lors de la lecture d'une carte magnétique, ajoutées éventuellement au code PIN (Personnal Identification Number) de la carte, permettent une fraude relativement aisée compte tenu de la facilité à les recopier ensuite sur une nouvelle piste magnétique. En effet, de nombreux appareils en vente libre et à bas prix permettent de créer de nouvelles cartes magnétiques avec les informations désirées.

Ainsi, il est facile d'obtenir des répliques frauduleuses, virtuelles ou physiques, des cartes de paiement lues par un terminal de paiement attaqué, et ceci à l'insu du propriétaire de la carte de paiement utilisée, du fabricant du terminal de paiement et des services bancaires avec lesquels est en relation le terminal de paiement.

Ce problème est pointé du doigt par l'organisme de normalisation PCI PTS, qui dans sa révision 3 annonce une augmentation du « potential attack » sur les signaux de la tête magnétique, et recommande de ce fait d'accroître les mesures de protection contre la fraude sur la tête magnétique de tels terminaux.

De plus, s'il est connu que l'installation d'un appareil parasite sur un terminal peut se traduire par une interruption temporaire d'un signal en sortie de la tête de lecture d'un terminal, il est par contre difficile de détecter la présence d'un tel appareil, une fois celui-ci installé.

Il existe donc un besoin avéré pour de nouveaux terminaux de paiement adaptés à l'usage de cartes magnétiques et offrant une meilleure protection aux possesseurs de cartes de paiement magnétiques.

Le document de brevet US 2008/315989 concerne un terminal de lecture de cartes magnétiques comportant plusieurs moyens de sécurisation des données lues par la tête de lecture des cartes magnétiques.

Le document de brevet US 2008/265032 concerne une tête de lecture de cartes magnétiques sécurisée.

### 3. Objectifs de l'invention

L'invention a notamment pour objectif de pallier certains inconvénients de l'art antérieur.

Plus précisément, un objectif de l'invention, dans au moins un de ses modes de réalisation, est de fournir un terminal de paiement par carte magnétique plus robuste aux attaques sur sa tête magnétique, et permettant notamment de les détecter de façon plus fiable par la mise en évidence de symptômes encore inconnus.

### 4. Exposé de l'invention

Les inventeurs ont remarqué qu'une tentative d'installation d'un appareil parasite sur des branches de sortie d'une tête de lecture d'un terminal de paiement électronique se traduisait souvent par un court-circuit entre au moins deux branches de sorties de la tête de lecture de ce terminal. En effet, la distance entre les pistes issues de la tête magnétique étant très faible (de l'ordre de 0,15 mm), il est fréquent que l'attaquant provoque un court-circuit sur le terminal en rajoutant ses propres pistes.

De ce fait, l'invention concerne un dispositif de protection incluant des moyens de détection d'un court-circuit entre au moins deux branches de sortie d'une tête de lecture magnétique. Selon l'invention, chacune desdites branches de sortie est apte à véhiculer un signal lu par ladite tête de lecture sur une piste d'une carte magnétique et lesdits moyens de détection sont aptes à détecter un court-circuit pendant la lecture d'au moins une piste d'une carte magnétique.

Il s'agit là d'un avantage majeur par rapport à l'art antérieur.

En effet, certaines solutions de l'art antérieur s'attachent à surveiller les coupures des signaux électriques en sortie de la tête de lecture. De ce fait, lorsqu'une attaque provoque un court-circuit en sortie de la tête de lecture d'un terminal, celui-ci est simplement considéré comme transitoirement inopérant puis, une fois le court-circuit enlevé, le fonctionnement du terminal semble normal. De ce fait, l'installation du terminal parasite passera inaperçue et sa présence sera ensuite indétectable.

L'invention permet par contre de détecter la présence d'un court-circuit, qui se traduira par exemple par une tension de valeur trop faible ou trop élevée, par rapport à une valeur seuil définie préalablement, sur les branches de sortie de la tête de lecture.

Ainsi, l'invention permet de détecter une tentative de branchement d'un appareil parasite.

Selon une caractéristique particulière de l'invention, lesdits moyens de détection incluent des moyens de comparaison d'un signal prélevé auxdites branches de sortie avec au moins un premier signal de référence.

Ce mode de mise en oeuvre de l'invention permet, grâce à des moyens simples et peu coûteux, de signaler l'occurrence d'un événement représentatif d'un premier type d'attaque.

Selon une caractéristique particulière de l'invention, lesdits moyens de détection incluent des moyens de superposition d'une composante continue à au moins un signal généré par ladite tête de lecture sur au moins une desdites branches de sortie.

L'utilisation d'une composante continue permet de se libérer des fluctuations propres à un signal alternatif et donc de disposer d'un moyen encore plus fiable de détection d'une attaque.

Dans un mode particulier de réalisation de l'invention, lesdits moyens de superposition permettent une superposition de manière permanente de ladite composante continue.

Ainsi, il est possible de détecter une attaque même lorsque celle-ci se produit lorsque le terminal n'est pas branché, notamment avant sa livraison, ou lorsqu'il est en transit.

Selon une caractéristique particulière de l'invention, le dispositif de protection inclut en outre des moyens de perception d'une altération d'au moins une branche de sortie de ladite tête de lecture.

L'invention permet notamment de mettre en évidence une rupture, par exemple une coupure, de l'une des branches de sortie.

Selon une caractéristique particulière de l'invention, lesdits moyens de perception incluent des moyens de comparaison d'un signal prélevé sur une branche de sortie avec au moins un deuxième signal de référence.

Ce mode de mise en oeuvre de l'invention permet, grâce à des moyens simples et peu coûteux de signaler l'occurrence d'un événement représentatif d'un deuxième type d'attaque.

Selon une caractéristique particulière de l'invention, lesdits premier et deuxième signaux de référence étant matérialisées par des première et deuxième tensions de référence, la deuxième tension de référence a une valeur supérieure à la première tension de référence.

Cette variante de l'invention permet de définir une plage nominale de tension, dans laquelle une tension mesurée en sortie de la tête de lecture doit se situer si les conditions de fonctionnement de la tête de lecture sont normales. A contrario, une non-inclusion dans cette plage nominale de la tension mesurée en sortie de la tête de lecture sera symptomatique d'une attaque.

Selon un autre aspect, l'invention concerne un terminal de paiement électronique incluant une tête de lecture magnétique munie d'au moins deux branches de sortie et une unité de traitement comprenant des moyens de traitement d'au moins un signal de sortie généré par ladite tête de lecture. Selon l'invention, un tel terminal inclut en outre un dispositif de protection selon l'invention.

Ainsi, l'invention propose un terminal de paiement apte à détecter de façon nouvelle une attaque sur ladite tête de lecture.

Selon une caractéristique particulière de l'invention, lesdits moyens de traitement comprennent des moyens de filtrage dudit signal généré.

Selon une caractéristique particulière de l'invention, lesdits moyens de filtrage sont aptes à éliminer une composante continue dudit signal généré.

Ainsi, la composante continue ne perturbera pas le décodage du signal de sortie.

Selon une caractéristique particulière de l'invention, ledit terminal comprend en outre des moyens de réaction en cas de détection d'un court-circuit entre au moins deux desdites branches de sorties et/ou de perception d'une altération d'une desdites branches de sorties, assimilée à une attaque, par ledit dispositif de protection.

Selon une caractéristique particulière de l'invention, lesdits moyens de réaction comprennent au moins un des moyens appartenant au groupe comprenant :
- des moyens de mémorisation de ladite attaque ;
- des moyens de dissuasion aptes à dissuader l'insertion d'une carte magnétique ;
- des moyens de limitation des capacités de fonctionnement de ladite tête de lecture ;
- des moyens de génération d'une alarme sur ledit terminal ou vers un tiers de contrôle;
- des moyens d'émission vers un tiers de contrôle d'au moins une donnée sensible.

Ainsi, l'invention permet de contrer l'attaque en limitant ses possibilités de nuisance et/ou en alertant un tiers de contrôle.

Selon une caractéristique particulière de l'invention, ladite au moins une donnée sensible appartient au groupe comprenant :
- une donnée relative à au moins une carte de paiement introduite dans ledit terminal lors ou après ladite attaque ;
- un horodatage de l'attaque ;
- une identification du commerçant ayant la garde dudit terminal ;
- une adresse dudit commerçant ;
- un numéro de série dudit terminal ;
- une information d'identification du fabricant ou d'un gestionnaire dudit terminal.

L'invention peut notamment permettre, lors de chaque lecture d'une carte, de transmettre à un tiers de contrôle les informations obtenues après décodage des signaux générés par la tête de lecture du terminal attaqué, de façon à pouvoir inhiber les cartes potentiellement recopiées.

Elle permet également de fournir les informations nécessaires à l'identification et à la localisation du terminal attaqué.

Selon une caractéristique particulière de l'invention, ladite tête de lecture magnétique comprend au moins deux branches de sortie reliées à ladite unité de traitement et situées sur une nappe d'implantation, au moins une desdites branches de sortie étant située sur une face accessible de ladite nappe d'implantation et étant solidarisée à un ruban protecteur recouvrant au moins partiellement lesdites autres branches de sortie de façon à les isoler des regards et à limiter leur accès.

Ainsi, selon l'invention, une atteinte audit ruban provoquera une modification de ses caractéristiques électriques qui induira une variation du signal produit sur ladite autre branche de sortie permettant de mettre en évidence une tentative d'accès à ladite au moins une branche de sortie qu'elle protège.

L'invention propose donc d'utiliser certaines branches de sortie de la tête de lecture pour en protéger d'autres. Cette solution permet de ce fait une diminution du nombre de pistes conductrices nécessaires, ce qui a l'avantage de minimiser l'encombrement de la nappe nécessaire à l'assemblage des composants, et donc sa complexité et sa taille, ainsi que le prix de revient du terminal.

Ainsi, dans ce mode de réalisation, l'invention permet de disposer d'une double protection contre les attaques : d'une part, par une protection par maillage (ou blindage) des branches de sortie véhiculant un signal sensible et d'autre part par la présence d'un dispositif de protection qui détecte une variation anormale d'un signal.

Selon une caractéristique particulière de l'invention, ledit dispositif de protection est inclus dans ladite unité de traitement et ladite autre branche fournit un signal de référence audit dispositif de protection.

Dans ce mode de réalisation, l'invention permet ainsi de minimiser encore la complexité du terminal, et donc les coûts de fabrication associés, et de rendre invisible le dispositif de protection, de façon à piéger plus facilement les attaquants.

Selon encore un autre aspect, l'invention concerne une tête de lecture magnétique comprenant au moins deux branches de sortie reliées à une unité de traitement et situées sur une nappe d'implantation.

Selon l'invention, au moins une desdites branches de sortie est située sur une face accessible de ladite nappe d'implantation et est solidarisée à un ruban protecteur recouvrant au moins partiellement lesdites autres branches de sortie de façon à les isoler des regards et à limiter leur accès.

Ainsi, une atteinte audit ruban provoquera une variation du signal produit par ladite autre branche de sortie.

En d'autres termes, l'invention concerne une tête de lecture magnétique comprenant au moins trois branches de sortie, deux desdites branches de sorties étant reliées à une unité de traitement et recouvertes par un matériel conducteur rigide relié à l'unité de traitement et présentant des circonvolutions destinées à recouvrir lesdites deux branches de sortie.

Selon l'invention, ledit matériel rigide comprend ladite troisième branche de sortie. L'invention est définie dans les revendications. **5. Liste des figures** D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre un premier mode de réalisation d'un dispositif de protection selon l'invention ;
- la figure 2 illustre un second mode de réalisation d'un dispositif de protection selon l'invention ;
- la figure 3 décrit un terminal de paiement électronique comprenant des moyens de mise en oeuvre de l'invention ;
- la figure 4a illustre un maillage de protection selon l'invention, tel que vu sur la face accessible de la nappe d'implantation des composants d'un tel terminal;
- la figure 4b illustre le maillage de protection de la figure 4, vu de la face cachée de la nappe d'implantation des composants.

### 6. Description d'un mode de réalisation de l'invention

### 6.1 Principe général

Le principe général de l'invention consiste, selon un premier aspect, à ajouter une composante continue aux signaux produits par la tête magnétique, cette composante continue étant ultérieurement éliminée avant décodage des signaux, par exemple au moyen de condensateurs disposés en entrée du circuit de décodage F/2F standard.

Cette composante continue permet de disposer d'un signal témoin en sortie de la tête de lecture magnétique, qui est prélevé pour être comparé à des seuils minimum et/ou maximum, afin de détecter une éventuelle attaque.

En effet, une attaque sur les branches de sortie de la tête magnétique risque de provoquer un court-circuit entre les signaux de deux branches de sortie ou une rupture de l'une des branches, et donc de modifier le signal en sortie de la tête de lecture, ce qui déclenchera une alarme lorsqu'elle passera en-dessous ou au-dessus de certaines valeurs seuils.

A la différence de certaines solutions de l'art antérieur, l'invention permet de détecter non seulement les coupures de piste mais également les courts-circuits.

En effet, la présence d'un court-circuit se traduira par une tension nulle ou par un courant de très forte intensité, ce qui permettra de générer une alarme.

Ainsi, l'invention permet de mettre en évidence une tentative de branchement d'un appareil parasite.

Elle permet de ce fait de diminuer les possibilités de nuisance d'un attaquant, et ceci notamment avant la lecture frauduleuse d'une carte magnétique, par exemple par une mise hors service ou en quarantaine du terminal, ou par un signalement de l'attaque à des forces de police.

Selon un second aspect, qui peut dans certains modes de réalisation être mis en oeuvre de façon indépendante du premier aspect cité plus haut, l'invention propose également une solution originale de protection par maillage (ou blindage, ou encore wiremesh selon la terminologie anglaise). En effet, à l'inverse des solutions de l'art antérieur qui utilisent un signal indépendant pour la protection par maillage des branches de sortie de la tête de lecture, l'invention propose d'utiliser certaines branches de sortie de la tête de lecture pour en protéger d'autres.

Par exemple, dans le cas particulier d'une tête de lecture compatible avec des cartes magnétiques respectant la norme ISO 7811, les informations présentes sur la piste ISO3 de la carte n'étant pas confidentielles, au moins un des deux fils de la branche ISO3 de la tête de lecture peut être utilisé comme maillage pour protéger les branches de sortie ISO1 et ISO2.

### 6.2 Présentation d'un premier mode de réalisation d'un dispositif de protection selon l'invention :

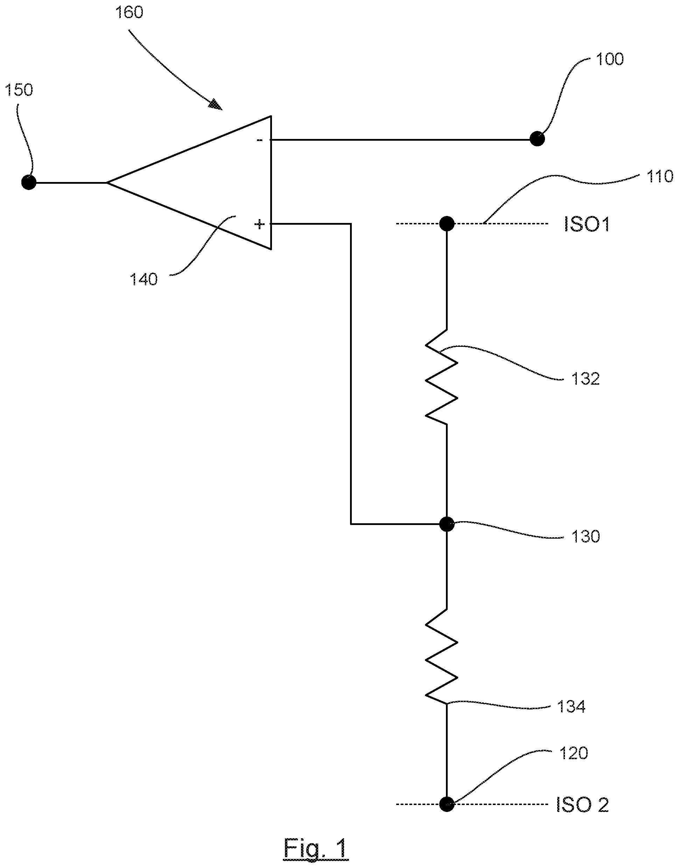

On présente à présent, en relation avec la figure 1 un premier mode de réalisation d'un dispositif de protection selon l'invention.

Un tel dispositif de protection comprend des moyens de détection 160 d'un court-circuit entre au moins deux branches de sortie 110 et 120. Il s'agit ici des branches de sorties ISO 1 et ISO 2 d'une tête de lecture magnétique apte à lire les pistes magnétiques présentes sur une carte magnétique respectant la norme ISO 7811. Le dispositif pourrait cependant être utilisé pour fiabiliser les branches de sortie propres à d'autres types de composants électroniques véhiculant des données sensibles, par exemple des clés de cryptage.

Selon la figure 1, les moyens de détection 160 incluent des moyens de comparaison 140 entre une tension de référence 100, et une tension mesurée sur un noeud intermédiaire 130 d'un pont diviseur de tension disposé entre les branches de sortie 110 et 120. Dans d'autres modes de réalisation, les moyens de détection peuvent inclure des moyens de comparaison entre des intensités de courants représentatifs de courants véhiculés par les branches de sortie, et prélevés par exemple au moyen de miroirs de courant.

Dans le cas particulier présenté en figure 1, une tension continue est superposée aux tensions mesurées sur les branches de sortie. La tension continue peut notamment être superposée de manière permanente, par exemple par le biais d'une pile.

Le pont diviseur comporte deux résistances 132 et 134. De cette façon, la tension du noeud intermédiaire 130 est proportionnelle à la tension entre les deux branches de sortie 110 et 120.

La valeur de la tension de référence 100 peut notamment être choisie de façon à être, en fonctionnement normal, bien inférieure à la tension du noeud intermédiaire 130.

Dans le mode de réalisation illustré en figure 1, les moyens de comparaison sont constitués d'un amplificateur opérationnel 140 monté en comparateur, dont une sortie 150 produit une tension de sortie qui diffère selon le résultat de la comparaison effectuée.

Ainsi, lorsque la tension de référence est choisie de façon à être toujours inférieure, en fonctionnement normal, à la tension en sortie du pont de tension, la tension de sortie du comparateur 140 aura une valeur maximale en fonctionnement normal et, si la tension du noeud intermédiaire 130 du pont diviseur s'annule, une valeur minimale.

Lorsque les branches de sortie sont polarisées avec des tensions de valeurs proches, la présence d'un court-circuit entre les branches de sortie 110 et 120 se traduira par une tension très faible entre les deux branches, et donc par une tension très faible, proportionnellement, sur le noeud intermédiaire 130 du pont diviseur. De ce fait, la tension de sortie du comparateur 140 passera alors de la valeur maximale à la valeur minimale. Cette transition permettra la détection du court-circuit.

Dans un autre mode de réalisation, non illustré, où il n'est pas superposé de tension continue, les moyens de comparaison peuvent inclure des moyens permettant de tenir compte d'un déphasage entre la tension de référence et la tension mesurée.

### 6.3 Présentation d'un second mode de réalisation d'un dispositif de protection selon l'invention :

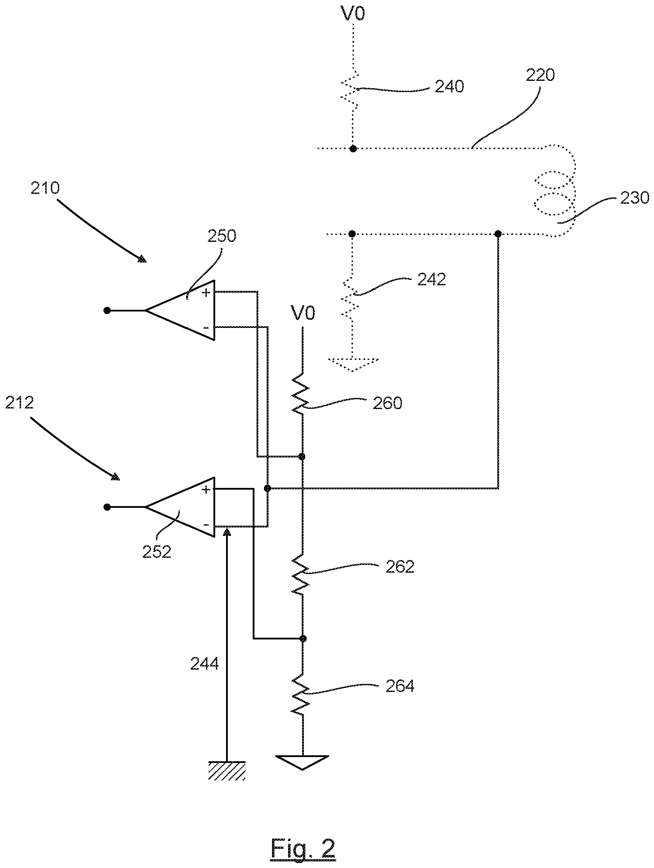

On présente à présent, en relation avec la figure 2 un second mode de réalisation d'un dispositif de protection selon l'invention, qui protège l'une des branches de sortie d'une tête de lecture, ici la branche de sortie véhiculant les signaux en provenance de la piste ISO1 d'une carte magnétique à la norme ISO 7811. Dans le cas particulier de la figure 2, les branches de sortie sont polarisées avec des tensions dont les valeurs sont différentes.

Un tel dispositif de protection comprend des moyens de détection 212 d'un court-circuit entre la branche de sortie 220 et au moins une autre branche de sortie de la tête de lecture, par exemple une branche de sortie ISO2.

Selon le mode de réalisation présenté en figure 2, le dispositif de protection inclut également des moyens de perception 210 d'une altération de la branche de sortie 220.

Selon la figure 2, les moyens de détection 212 d'un court-circuit incluent des premiers moyens de comparaison, par exemple le comparateur 252, et les moyens de perception 210 d'une altération de la branche de sortie 220 incluent des deuxièmes moyens de comparaison, par exemple le comparateur 250. Ces premier et deuxième moyens de comparaison surveillent respectivement la tension de la branche de sortie par comparaison avec des première et deuxième tensions de référence.

Selon l'invention, les moyens de détection 212 du dispositif peuvent notamment inclure des moyens de superposition d'une composante continue au signal produit par la tête de lecture 230 sur la branche de sortie 220. Ces moyens de superposition peuvent notamment consister en des résistances 240, 242 implantées en entrée et en sortie de la tête de lecture 230. Ainsi, selon la figure 2, une tension continue égale à VO.R240/(R240+R242) est ajoutée à la tension alternative produite par la tête de lecture 230 sur la branche de sortie 220 au point milieu des résistances 240 et 242, pour produire une tension de mesure 244.

Lorsque le mode de réalisation du dispositif de protection comprend la génération d'une telle composante continue, celle-ci permet, par exemple grâce à la présence de résistances 260, 262 et 264, de générer un signal continu de référence, proportionnel à la composante continue, et constituant un seuil minimum ou maximum servant à déclencher une alarme.

Dans le mode de réalisation présenté en figure 2, le comparateur 252 permet de comparer la tension de mesure 244 à une première tension de référence, qui constitue un seuil minimum, et le comparateur 250 permet de comparer la tension de mesure 244 à une seconde tension de référence, qui constitue un seuil maximum.

Ainsi, dans le mode de réalisation présenté, un court-circuit avec une autre branche de sortie de la tête de lecture 220, par exemple une branche ISO2 ou ISO3, provoquera une variation de la tension de mesure 244. Si la valeur de la tension de mesure 244 devient inférieure à la valeur de première tension de référence, le comparateur 252 signalera une alarme, elle devient supérieure à la valeur de la deuxième tension de référence, le comparateur 250 signalera une alarme.

Une rupture de la branche de sortie 220 de la tête de lecture 230 provoquera une augmentation de la valeur de la tension de mesure 244. De ce fait, elle sera supérieure au seuil maximum de référence du comparateur 250 et celui-ci signalera une alarme.

Ainsi, dans le mode particulier de réalisation illustré en figure 2, le dispositif de protection permet de caractériser une attaque par la présence d'une tension hors d'une plage de tension admissible, déterminée par les première et seconde tensions de référence, la seconde tension de référence ayant une valeur supérieure, en valeur absolue, à la valeur de la première tension de référence.

### 6.4 Présentation d'un premier mode de réalisation d'un terminal de protection selon l'invention :

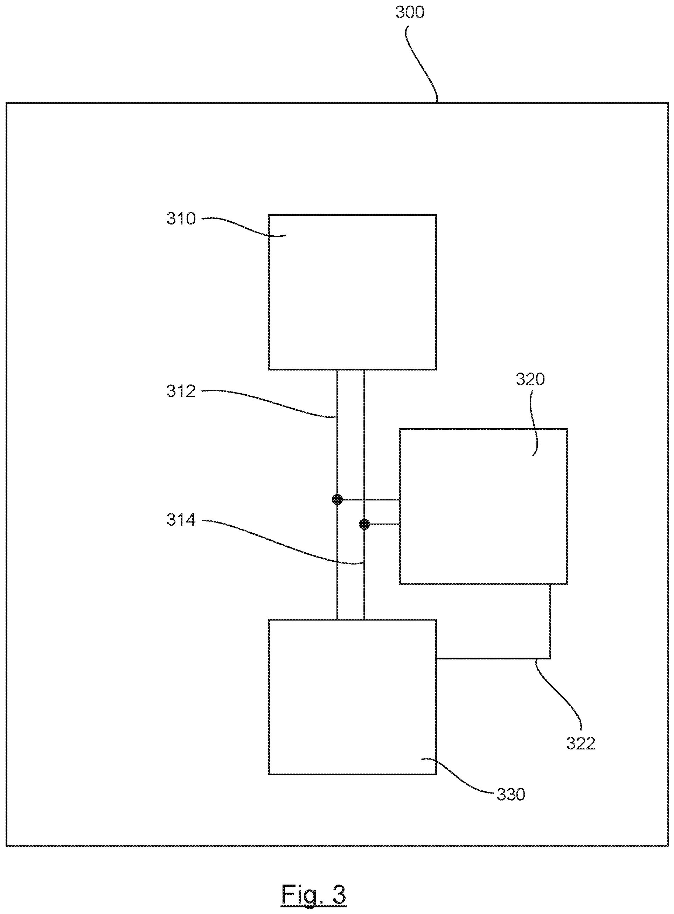

On présente à présent, en relation avec la figure 3 un terminal de paiement électronique comprenant des moyens de mise en oeuvre de l'invention.

Un tel terminal 300 comprend au moins:
- une tête de lecture magnétique 310 comprenant au moins deux branches de sortie, 312 et 314,
- une unité de traitement 330 comprenant des moyens de traitement d'au moins un signal produit par la tête de lecture 310 sur les branches de sortie 312 et 314 ;
- un dispositif de protection 320 selon l'invention ;

Ces différents composants peuvent par exemple être implantés sur une nappe souple.

La tête de lecture peut par exemple être apte à lire les informations présentes sur les pistes d'une carte magnétique respectant la norme ISO 7811. Dans ce cas particulier, une branche de sortie 312 peut par exemple véhiculer un signal lu sur une piste ISO 1 d'une telle carte magnétique et une autre branche de sortie 314 peut véhiculer un signal lu sur une piste ISO 2 de cette carte magnétique.

Dans le mode de réalisation illustré en figure 3, le dispositif de protection 320 est apte à détecter un court-circuit entre les branches de sortie 312 et 314 et à mettre en évidence une altération de l'une des branches de sortie, par exemple une coupure de l'une des branches. Dans certains modes de réalisation particuliers de l'invention, le dispositif de protection 320 peut être inclus dans l'unité de traitement 330.

Les moyens de traitement de l'unité de traitement peuvent notamment inclure des moyens de filtrage de l'un des signaux véhiculés par les branches 312 et 314, par exemple au moins un amplificateur différentiel fournissant un signal analogique, et/ou des moyens de décodage de ces signaux, par exemple un décodeur F/2F.

En particulier, lorsque le mode de réalisation du dispositif de protection inclut des moyens de superposition d'une composante continue, les moyens de filtrage peuvent notamment être aptes à éliminer cette composante continue, par exemple, par le biais de condensateurs implantés en entrée du circuit de décodage.

Dans certains modes de réalisation de l'invention, le terminal de paiement peut en outre comprendre des moyens de réaction en cas de détection d'un court-circuit ou d'une altération d'une branche. Certains de ces moyens de réaction peuvent en particulier être inclus dans l'unité de traitement 330 et/ou utiliser d'autres composants du terminal, comme un écran, une mémoire sécurisée, une carte son, une interface réseau....

Dans ce cas, le terminal comprend des moyens de communication 322 entre le dispositif de protection et l'unité de traitement 330 aptes à transmettre une indication en cas de court-circuit et/ou d'altération d'une branche. Il peut notamment s'agir d'une tension de sortie de l'un des comparateurs 250 et 252 illustrés en figure 2.

Selon les modes de mise en oeuvre de l'invention, les moyens de réaction peuvent comprendre au moins un des moyens appartenant au groupe comprenant :
- des moyens de mémorisation de l'attaque ;
- des moyens de dissuasion aptes à dissuader l'insertion d'une carte magnétique ;
- des moyens de limitation des capacités de fonctionnement de ladite tête de lecture ;
- des moyens de génération d'une alarme sur ledit terminal ou vers un tiers de contrôle;
- des moyens d'émission vers un tiers de contrôle d'au moins une donnée sensible.

Les moyens de dissuasion peuvent par exemple constituer en des moyens destinés à avertir un utilisateur d'un danger, par exemple par affichage d'un message d'avertissement sur un écran du terminal, ou par déclenchement d'une alarme sonore. Ils peuvent également consister en des moyens physiques destinés à empêcher l'introduction d'une carte, par exemple un clapet positionnable de façon à fermer la fente destinée à l'introduction de la carte ou un ergot positionnable dans l'emplacement destinée à la lecture de la carte.

Les moyens de limitation des capacités de fonctionnement de la tête de lecture peuvent par exemple consister en des moyens de coupure de l'alimentation électrique de la tête de lecture.

Les moyens de génération d'une alarme peuvent permettre la génération d'une alarme, par exemple sous forme sonore ou textuelle, sur le terminal ou à distance. Cette alarme peut par exemple être destinée au fabricant du terminal, ou à des tiers de contrôle, comme des services interbancaires ou des services de police.

L'alarme peut en particulier inclure des informations permettant de caractériser l'attaque, comme le moment de l'attaque.

Elle peut aussi comprendre des informations aidant à y remédier, par exemple :
- en localisant et/ou en identifiant le terminal attaqué, grâce notamment à un numéro de série ou à une information d'identification du fabricant ou d'un gestionnaire du terminal, et/ou
- en fournissant l'identité et/ou l'adresse de la personne ayant la garde du terminal en étant responsable et/ou
- en identifiant au moins une carte de paiement introduite depuis l'attaque.

Le terminal peut également comprendre des moyens de mémorisation de l'attaque, par exemple le positionnement d'un témoin de signalisation, symbolisant l'état d'alerte du terminal, lors de la détection de l'alarme.

Ainsi, le terminal est notamment apte à générer systématiquement une alarme après chaque lecture d'une carte de paiement, afin de permettre une surveillance des transactions effectuées ensuite sur cette carte.

Un tel terminal peut également comprendre des moyens de remise en état normal du terminal, dont l'activation est soumise par exemple par un contrôle de l'habilitation de l'opérateur.

### 6.5 Présentation d'un maillage de protection selon l'invention

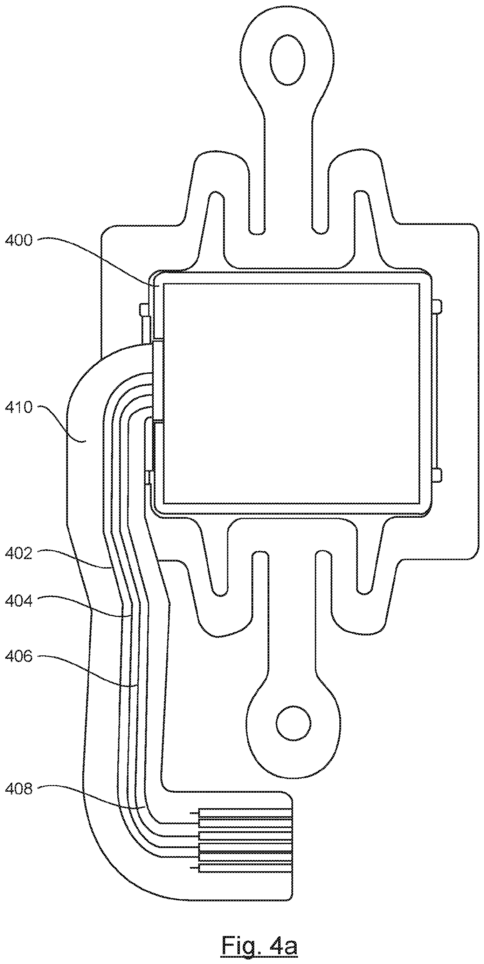

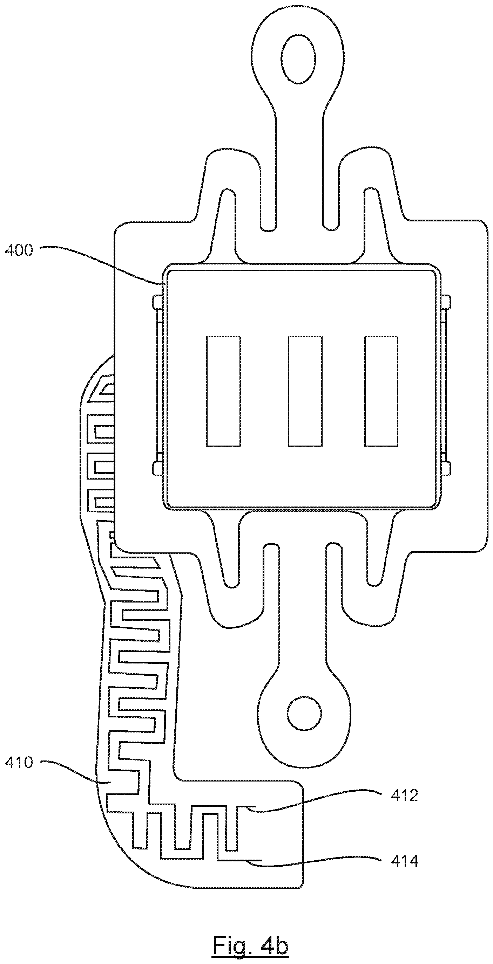

On présente à présent, en relation avec les figures 4 et 5 un maillage de protection selon l'invention.

Les solutions de l'art antérieur protègent classiquement des pistes conductrices en les recouvrant d'un ruban protecteur, conducteur, de façon à ce qu'une tentative d'accès aux pistes à protéger se traduise par une altération du ruban et de ses propriétés conductrices. Une telle tentative peut notamment consister en une découpe au scalpel du ruban pour le passage d'une sonde destinée à l'espionnage des signaux de la tête magnétique.

A l'inverse des solutions de l'art antérieur qui utilisent un signal indépendant pour apporter un caractère conducteur au ruban, l'invention propose d'utiliser certaines branches de sortie de la tête de lecture pour en protéger d'autres.

La figure 4a illustre un tel maillage, vu depuis la face cachée, non accessible à un tiers, de la nappe d'implantation des composants d'un terminal tel qu'illustré en figure 3, et la figure 4b présente le même maillage mais vu depuis la face accessible de la nappe.

La tête de lecture 400 illustrée par les figures 4a et 4b est apte à lire des cartes magnétiques respectant la norme ISO 7811 et comportant donc trois pistes magnétiques, dites ISO 1 (ou IATA), ISO 2 (ou ABA) et ISO3 (ou THRIFT). Trois branches, destinées chacune à la transmission des informations contenues sur l'une des pistes ISO 1, ISO 2 et ISO 3, sont associées à la tête de lecture 400. Chacune de ces branches est composée d'une piste reliée à l'entrée de la tête de lecture et d'une piste, ou branche de sortie, reliée à la sortie de la tête de lecture.

Par souci de simplicité, on appellera « branche ISO 1 » la branche destinée à la transmission des informations lues sur la piste ISO 1, « branche ISO 2» celle destinée à la transmission des informations lues sur la piste ISO 2, et « branche ISO 3» celle destinée à la transmission des informations lues sur la piste ISO 3.

Dans le mode de réalisation illustré dans les figures 4a et 4b, les deux fils de la branche ISO3 sont utilisés pour protéger les deux fils des branches ISO1 et ISO2.

Dans une variante de ce mode de réalisation de l'invention, seul l'un des fils de la branche ISO 3, par exemple la branche de sortie, peut être utilisé comme protection.

Dans une autre variante, éventuellement compatible avec la variante précédente, seules sont protégées les branches de sorties des branches ISO 1 et ISO 2.

La figure 4a permet de visualiser les deux fils 402 et 404 de la branche ISO 1 et les deux fils 406 et 408 de la branche ISO 2.

Ces quatre fils sont placés sous un ruban protecteur 410, situé sur la face accessible, destiné à les isoler des regards et à les protéger d'un accès physique malveillant.

La figure 4b permet de visualiser les deux fils 412 et 414 de la branche ISO3 incorporés au ruban protecteur 410.

Dans le mode de réalisation illustré en figure 4b, les fils 412 et 414 de la branche ISO3 présentent des circonvolutions de façon à ce qu'une altération du ruban protecteur 410 provoque très probablement une rupture d'au moins un des fils 412 ou 414.

Dans d'autres modes de réalisation, éventuellement complémentaires, au moins une des branches utilisées comme protection peut être réalisée dans un matériau de couleur identique à celui utilisé pour le ruban, et/ou être implantée entre les branches à protéger et le ruban, de façon à être cachée des regards et donc à maximiser la probabilité de rupture de la branche de protection en cas d'accès malveillant.

Dans certaines modes de réalisation, il est prévu de protéger certaines branches véhiculant des informations sensibles en utilisant comme maillage de protection des branches ne véhiculant pas elles-mêmes des informations sensibles. Ainsi, dans le mode de réalisation illustré en figure 4a et 4b, la branche de sortie utilisée en maillage de protection est la piste ISO3.

### 6.6 Autre mode particulier de réalisation du terminal de l'invention

Selon un mode de réalisation particulier du terminal de l'invention, le dispositif de protection peut être inclus dans l'unité de traitement du terminal et l'une des branches de sortie protégeant par maillage certaines branches de sortie peut être utilisée comme source d'un signal de référence pour le dispositif de protection.

Ce signal de référence peut notamment correspondre au premier ou au deuxième signal de référence du dispositif de protection.

## Revendications

1. Dispositif de protection incluant des moyens de détection d'un court-circuit entre au moins deux branches de sortie d'une tête de lecture magnétique **caractérisé en ce que** chacune desdites branches de sortie est apte à véhiculer un signal lu par ladite tête de lecture sur une piste d'une carte magnétique et **en ce que** lesdits moyens de détection sont aptes à détecter un court-circuit et incluent des moyens de comparaison d'un signal prélevé auxdites branches de sortie avec au moins un premier signal de référence et **en ce que** lesdits moyens de détection incluent des moyens de superposition d'une composante continue à au moins un signal généré par ladite tête de lecture sur au moins une desdites branches de sortie.

2. Dispositif de protection selon la revendication 1, **caractérisé en ce que** lesdits moyens de superposition permettent une superposition de manière permanente de ladite composante continue.

3. Dispositif de protection selon l'une quelconque des revendications 1 à 2, **caractérisé en ce qu'**il inclut en outre des moyens de perception d'une altération d'au moins une branche de sortie de ladite tête de lecture.

4. Dispositif de protection selon l'une quelconque des revendications 1 à 3, **caractérisé en ce que** lesdits moyens de perception incluent des moyens de comparaison d'un signal prélevé sur une branche de sortie avec au moins un deuxième signal de référence.

5. Dispositif de protection selon les revendications 1 et 4, **caractérisé en ce que** lesdits premier et deuxième signaux de référence étant matérialisées par des première et deuxième tensions de référence, la deuxième tension de référence a une valeur supérieure à la première tension de référence.

6. Terminal de paiement électronique incluant une tête de lecture magnétique munie d'au moins deux branches de sortie et une unité de traitement comprenant des moyens de traitement d'au moins un signal de sortie produit par ladite tête de lecture, **caractérisé en ce qu'**il inclut en outre un dispositif de protection selon l'une quelconque des revendications 1 à 5.

7. Terminal de paiement électronique selon la revendication 6 **caractérisé en ce que** lesdits moyens de traitement comprennent des moyens de filtrage dudit signal généré.

8. Terminal de paiement électronique selon la revendication 7, **caractérisé en ce que** lesdits moyens de filtrage sont aptes à éliminer une composante continue dudit signal généré.

9. Terminal de paiement électronique selon l'une quelconque des revendications 6 à 8 **caractérisé en ce que** ladite tête de lecture magnétique comprend au moins deux branches de sortie reliées à ladite unité de traitement et situées sur une nappe d'implantation, au moins une desdites branches de sortie étant située sur une face accessible de ladite nappe d'implantation et étant solidarisée à un ruban protecteur recouvrant au moins partiellement lesdites autres branches de sortie de façon à les isoler des regards et à limiter leur accès.

10. Terminal de paiement électronique selon l'une quelconque des revendications 6 à 9 **caractérisé en ce que** ledit dispositif de protection est inclus dans ladite unité de traitement et **en ce que** ladite autre branche fournit un signal de référence audit dispositif de protection.

11. Tête de lecture magnétique comprenant au moins deux branches de sortie aptes à véhiculer un signal lu par ladite tête de lecture et reliées à une unité de traitement et situées sur une nappe d'implantation, **caractérisée en ce qu'**au moins une desdites branches de sortie est située sur une face accessible de ladite nappe d'implantation et est solidarisée à un ruban protecteur recouvrant au moins partiellement lesdites autres branches de sortie de façon à les isoler des regards et à limiter leur accès.

## Patentansprüche

1. Schutzvorrichtung, die Mittel zum Erfassen eines Kurzschlusses zwischen mindestens zwei Ausgangszweigen eines magnetischen Lesekopfes aufweist, **dadurch gekennzeichnet, dass** jeder der Ausgangszweige geeignet ist, ein Signal, das von dem Lesekopf gelesen wird, auf einem Streifen einer Magnetkarte zu übertragen, und dadurch, dass die Mittel zum Erfassen geeignet sind, einen Kurzschluss zu erfassen und Mittel zum Vergleichen eines Signals, das an den Ausgangszweigen abgegriffen wird, mit mindestens einem ersten Referenzsignal, aufweisen und dass die Mittel zum Erfassen Mittel zum Überlagern einer Gleichkomponente auf einem Signal, das von dem Lesekopf erzeugt wird, auf mindestens einem der Ausgangszweige aufweisen.

2. Schutzvorrichtung nach Anspruch 1, **dadurch gekennzeichnet, dass** die Mittel zum Überlagern eine dauerhafte Überlagerung der Gleichkomponente ermöglichen.

3. Schutzvorrichtung nach einem der Ansprüche 1 bis 2, **dadurch gekennzeichnet, dass** sie ferner Mittel zum Wahrnehmen einer Änderung von mindestens einem der Ausgangszweige des Lesekopfes aufweisen.

4. Schutzvorrichtung nach einem der Ansprüche 1 bis 3, **dadurch gekennzeichnet, dass** die Mittel zum Wahrnehmen Mittel zum Vergleichen eines Signals, das an einem Ausgangszweig abgegriffen wird, mit mindestens einem zweiten Referenzsignal aufweisen.

5. Schutzvorrichtung nach einem der Ansprüche 1 bis 4, **dadurch gekennzeichnet, dass** das erste und zweite Referenzsignal durch eine erste und eine zweite Referenzspannung verkörpert werden, wobei die zweite Referenzspannung einen Wert aufweist, der höher als die erste Referenzspannung ist.

6. Elektronischer Zahlungsterminal, der einen magnetischen Lesekopf aufweist, der mit mindestens zwei Ausgangszweigen und einer Verarbeitungseinheit versehen ist, die Mittel zum Verarbeiten von mindestens einem Ausgangssignal aufweist, das von dem Lesekopf erzeugt wird, **dadurch gekennzeichnet, dass** er ferner eine Schutzvorrichtung nach einem der Ansprüche 1 bis 5 aufweist.

7. Elektronischer Zahlungsterminal nach Anspruch 6, **dadurch gekennzeichnet, dass** die Mittel zum Verarbeiten Mittel zum Filtern des erzeugten Signals aufweisen.

8. Elektronischer Zahlungsterminal nach Anspruch 7, **dadurch gekennzeichnet, dass** die Mittel zum Filtern geeignet sind, eine Gleichkomponente des erzeugten Signals zu beseitigen.

9. Elektronischer Zahlungsterminal nach einem der Ansprüche 6 bis 8, **dadurch gekennzeichnet, dass** der magnetische Lesekopf mindestens zwei Ausgangszweige aufweist, die mit der Verarbeitungseinheit verbunden sind und auf einer Positionierungsbahn angeordnet sind, wobei mindestens einer der Ausgangszweige auf einer zugänglichen Fläche der Positionierungsbahn angeordnet ist und mit einem Schutzband fest verbunden ist, das mindestens teilweise die anderen Ausgangszweige derart bedeckt, um sie vor Blicken zu isolieren und ihren Zugang zu begrenzen.

10. Elektronischer Zahlungsterminal nach einem der Ansprüche 6 bis 9, **dadurch gekennzeichnet, dass** die Schutzvorrichtung in der Verarbeitungseinheit enthalten ist und dass der andere Zweig der Schutzvorrichtung ein Referenzsignal bereitstellt.

11. Magnetischer Lesekopf, der mindestens zwei Ausgangszweige aufweist, die geeignet sind, ein Signal, das von dem Lesekopf gelesen wird, zu übertragen, und die mit einer Verarbeitungseinheit verbunden sind und auf einer Positionierungsbahn angeordnet sind, **dadurch gekennzeichnet, dass** mindestens einer der Ausgangszweige auf einer zugänglichen Fläche der Positionierungsbahn angeordnet ist und mit einem Schutzband fest verbunden ist, das mindestens teilweise die anderen Ausgangszweige derart bedeckt, um sie vor Blicken zu isolieren und ihren Zugang zu begrenzen.

## Claims

1. Protecting device including detecting means a short-circuit between at least two output branches of a magnetic reading head, **characterized in that** each of said output branches is capable of conveying a signal read by said reading head on a track of a magnetic card and **in that** said detecting means are capable of detecting a short-circuit and include means for comparing a signal picked up at said output branches with at least one first reference signal and **in that** said detecting means include means for superimposing a DC component on at least one signal generated by said reading head on at least one of said output branches.

2. Protecting device according to claim 1, **characterized in that** said means for superimposing enable a permanent superimposing of said DC component.

3. Protecting device according to any one of the claims 1 to 2, **characterized in that** it furthermore includes means for perceiving a deterioration of at least one output branch of said reading head.

4. Protecting device according to any one of the claims 1 to 3, **characterized in that** said means for perceiving include means for comparing a signal picked up on an output branch with at least one second reference signal.

5. Protecting device according to claims 1 and 4, **characterized in that**, with said first and second reference signals taking the form of first and second reference voltages, the second reference voltage has a value greater than that of the first reference voltage.

6. Electronic payment terminal including a magnetic reading head provided with at least two output branches and one processing unit comprising means for processing at least one output signal produced by said reading head, **characterized in that** it furthermore includes a protecting device according to any one of the claims 1 to 5.

7. Electronic payment terminal according to claim 6 **characterized in that** said means for processing comprise means for filtering said generated signal.

8. Electronic payment terminal according to claim 7, **characterized in that** said means for filtering are capable of eliminating a DC component from said generated signal.

9. Electronic payment terminal according to any one of the claims 6 to 8, **characterized in that** said magnetic reading head comprises at least two output branches connected to said processing unit and situated on an implantation layer, at least one of said output branches being situated on an accessible face of said implantation layer and being fixedly attached to a protective strip at least partially covering said other output branches so as to hide them from view and limit access to them.

10. Electronic payment terminal according to any one of the claims 1 to 9, **characterized in that** said protecting device is included in said processing unit and **in that** said other branch provides a reference signal to said protecting device.

11. Magnetic reading head comprising at least two output branches capable of conveying a signal read by said reading head on a track of a magnetic card and connected to a processing unit and situated on an implantation layer, **characterized in that** at least one of said output branches is situated on a face accessible to said implantation layer and is fixedly attached to a protective strip at least partially covering said other output branches so as to keep them hidden from view and limit access to them.
